# EUROPEAN PATENT APPLICATION

(11) **EP 1 980 822 A1**
(43) Date of publication of application: **15.10.2008**
(21) Application number: 07706966.4
(22) Date of filing: 18.01.2007
(51) Int. Cl.: G01C 21/00, G08G 1/0969, G09B 29/00, G09B 29/10

(54) **NAVIGATION DEVICE, NAVIGATION METHOD, PROGRAM THEREFOR, AND RECORDING MEDIUM THEREFOR**

(30) Priority: 03.02.2006 JP 2006026895
(71) Applicant: Pioneer Corporation, Tokyo 153-8654 (JP)
(72) Inventor: OKAMOTO, Tatsuya, Kawagoe-shi, Saitama 350-8555 (JP); IMADA, Seiji, Kawagoe-shi, Saitama 350-8555 (JP); TANAKA, Kazuaki, Kawagoe-shi, Saitama 350-8555 (JP)
(74) Representative: Haley, Stephen
(86) International application number: PCT/JP2007/050662
(87) International publication number: WO 2007/088731

(57) **Abstract**

A stop detection unit 112 detects that a vehicle is stopped without utilizing the result of detection by a vehicle speed sensor 171 which employs vehicle speed pulses. And a vehicle speed pulse accuracy decision unit 113 detects the level of vehicle speed pulse accuracy according to the presence or absence of vehicle speed pulses in the state in which stopping of the vehicle is being detected. The degree to which the vehicle speed pulses are employed in processing by a navigation processing unit 116 to perform sensor offset measurement processing, calculation processing for the distance traveled, map matching processing, and the like is varied according to the vehicle speed accuracy which has been obtained in this manner. As a result, it is possible to present navigation information of good accuracy to the user.

## Description

### Technical field

The present invention relates to a navigation device and a navigation method, and to a navigation program and a recording medium therefore.

### Background Art

From the prior art, navigation devices have become very widespread which are mounted to the body of a mobile unit such as a motor vehicle or the like and which present to the operator navigation information, such as mapping information or the like about the path over which the unit travels. With such a navigation device, either GPS navigation is employed in which navigation is performed using the signals from the GPS (Global Positioning System) satellites, or autonomous navigation is employed in which navigation is performed using a speed sensor, an acceleration sensor, an angular velocity sensor and the like which are mounted to the mobile unit. To compare these two navigation methods together, their strong points and their weak points are different. Therefore, in particular for navigation devices for motor vehicles, the technology is often employed of providing a hybrid type navigation device which performs navigation at high accuracy by combining these two methods of navigation.

In the case of a motor vehicle mounted type navigation device, for example, when performing autonomous navigation, detection of the speed of the vehicle (hereinafter also termed the "vehicle speed") is performed based upon a pulse signal (hereinafter termed the "vehicle speed pulse signal") which is produced along with the rotation of a wheel axle or a vehicle wheel, and which is generated by an ABS (Antilock Braking System). Since such detection of the vehicle speed based upon a vehicle speed pulse signal is a method by which it is theoretically possible to detect the vehicle speed with extremely high accuracy, accordingly it may be employed for calculating the distance the vehicle has traveled, or for detecting vehicle the stopped state during detection for offset measurement for a sensor other than a speed sensor (for example, an angular velocity sensor) (refer to Patent Documents #1, #2, and #3). It should be understood that, in the case of a mobile unit other than a vehicle as well, if it is possible to detect the speed with good accuracy, then this is often used, in a manner similar to when detecting the vehicle speed based upon a vehicle speed pulse signal as described above.

Patent Document #1: Japanese Laid-Open Patent Publication Heisei 3-189514.
Patent Document #2: Japanese Laid-Open Patent Publication Heisei 9-318384.
Patent Document #3: Japanese Laid-Open Patent Publication Heisei 8-75486.

### SUMMARY OF THE INVENTION

### Problem at the Solution of which the Invention is Directed

As described above, many navigation devices take it as a premise that detection of speed by such a speed detection sensor is performed at high accuracy, and employ the result of detection by the speed detection sensor in various types of scenario. However, it may sometimes be the case that speed detection by the speed detection sensor is not performed at high accuracy. For example, with a navigation device which is mounted to a motor vehicle, if the vehicle speed is detected based upon vehicle speed pulses, sometimes it may be the case that a pulse signal is generated which cannot be properly distinguished from proper vehicle speed pulses, due to, for example, poor contact when the vehicle speed pulse signal was connected to the navigation device, conditions intrinsic to the type of vehicle, long term changes of the gear mechanism, or the like. In particular, when the vehicle is actually stopped, it becomes impossible to perform offset measurement for the acceleration sensor or the angular velocity sensor with good accuracy, since a state of affairs comes to pass in which this stopped state cannot be properly detected.

If, as described above, speed detection by the speed detection sensor cannot be performed with good accuracy, then, with a navigation device employing a technique such as in the above prior art example, it becomes impossible to present navigational information of high accuracy to the user. To avoid this type of state of affairs may be cited as one problem which the present invention is able to solve.

The present invention has been conceived in consideration of the circumstances described above, and it takes as its object to provide a navigation device and a navigation method, which can perform navigation at high accuracy.

### Means for Solving the Problem

As considered from a first aspect thereof, the present invention is a navigation device, characterized by comprising: a speed detection means which detects speed information of a mobile unit by utilizing a specified signal which reflects speed; a traveling state detection means which detects information about a traveling state of said mobile unit without utilizing said specified signal which reflects speed; a stop detection means which detects the stopped state of said mobile unit based upon at least one result of detection by said traveling state detection means; a decision means which, when it is detected by said stop means [sic] that said mobile unit is in the stopped state, decides whether or not the result of speed detection by said speed detection means is a speed which corresponds to the stopped state; and a navigation processing unit which, if the result of the decision by said decision means is negative, performs processing for navigation while giving more emphasis to the result of detection by said traveling state detection means, than when the result of the decision by said decision means is affirmative.

And, as considered from a second aspect thereof, the present invention is a navigation process which is used by a navigation device comprising a speed detection means which detects speed information of a mobile unit by utilizing a specified signal which reflects speed, and a traveling state detection means which detects information about a traveling state of said mobile unit without utilizing said specified signal which reflects speed, characterized by comprising: a stop detection process of detecting the stopped state of said mobile unit based upon at least one result of detection by said traveling state detection means; a decision process of, when it is detected by said stop process [sic] that said mobile unit is in the stopped state, deciding whether or not the result of speed detection by said speed detection means is a speed which corresponds to the stopped state; and a navigation processing process of, if the result of the decision by said decision process is negative, performing processing for navigation while giving more emphasis to the result of detection by said traveling state detection means, than when the result of the decision by said decision means is affirmative.

And, as considered from a third aspect thereof, the present invention is a navigation program, characterized in that a navigation method according to the present invention is executed by a calculation means of a navigation device.

And, as considered from a fourth aspect thereof, the present invention is a recording medium, characterized in that a navigation program according to the present invention is recorded thereupon so as to be readable by a calculation means of a navigation device.

### BRIEF DESCRIPTION OF THE DRAWINGS

Fig. 1 is a block diagram schematically showing the structure of a navigation device according to one embodiment of the present invention;
Fig. 2 is a block diagram for explanation of the structures of a motor vehicle speed pulse accuracy detection unit and a navigation processing unit of Fig. 1;
Fig. 3 is a flow chart for explanation of processing by the motor vehicle speed pulse accuracy detection unit for detecting the motor vehicle speed pulse accuracy;
Fig. 4 is a flow chart for explanation of processing in Fig. 3 for calculating reference values for acceleration and angular velocity;
Fig. 5 is a flow chart for explanation of processing in Fig. 3 for stop detection processing;
Fig. 6 is a flow chart for explanation of offset measurement processing by an autonomous sensor processing unit;
Fig. 7 is a flow chart for explanation of traveled distance calculation processing by the autonomous sensor processing unit; and
Fig. 8 is a flow chart for explanation of map matching processing by a navigation execution unit.

### BEST MODE FOR CARRYING OUT THE INVENTION

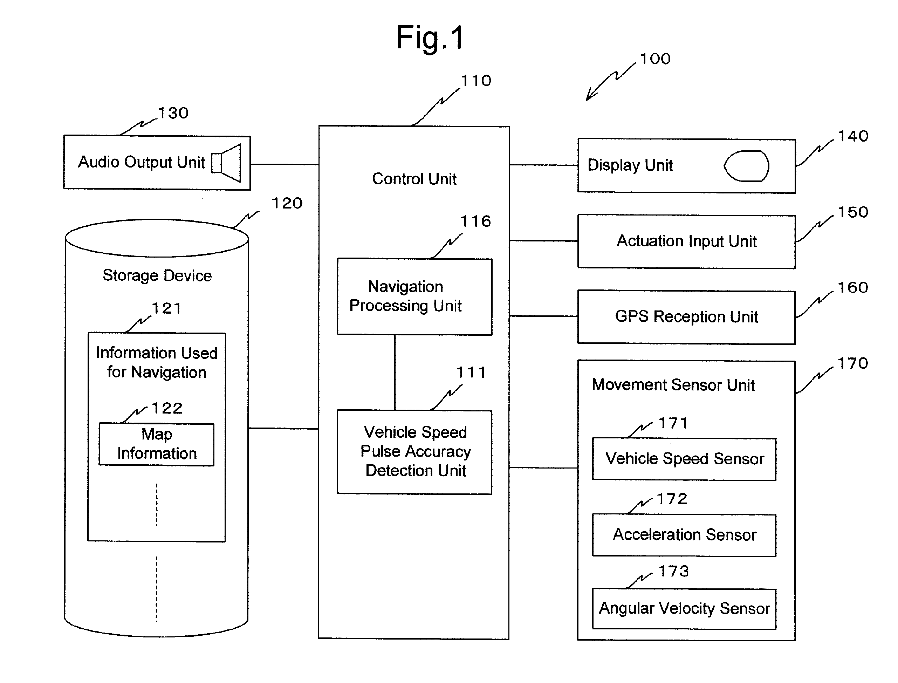

In the following, one embodiment of the present invention will be explained with reference to Figs. 1 through 8. It should be understood that, during the explanation of this embodiment, an example will be shown in of a hybrid type navigation device which is mounted to a motor vehicle.

### Structure

The schematic structure of a navigation device 100 according to this embodiment, which constitutes a vehicle state detection device, is shown in Fig. 1 as a block diagram. As shown in Fig. 1, this navigation device 100 comprises a control unit 110 and a storage device 120.

Furthermore, the navigation device 100 comprises an audio output unit 130, a display unit 140, and an actuation input unit 150. Moreover, the navigation device 100 comprises a GPS (Global Positioning System) reception unit 160 which serves as a position measurement means, and a movement sensor unit 170 which serves as a traveling state detection means.

It should be understood that, apart from the control unit 110 described above, the elements 120 through 170 are connected to the control unit 110.

Along with performing overall control of the navigation device 100 as a whole, the control unit 110 performs vehicle speed pulse accuracy detection processing as will be described hereinafter, and performs navigation processing and the like using the results of this vehicle speed pulse accuracy detection processing. This control unit 110 comprises a vehicle speed pulse accuracy detection unit 111 and a navigation processing unit 116 which serves as a navigation processing means.

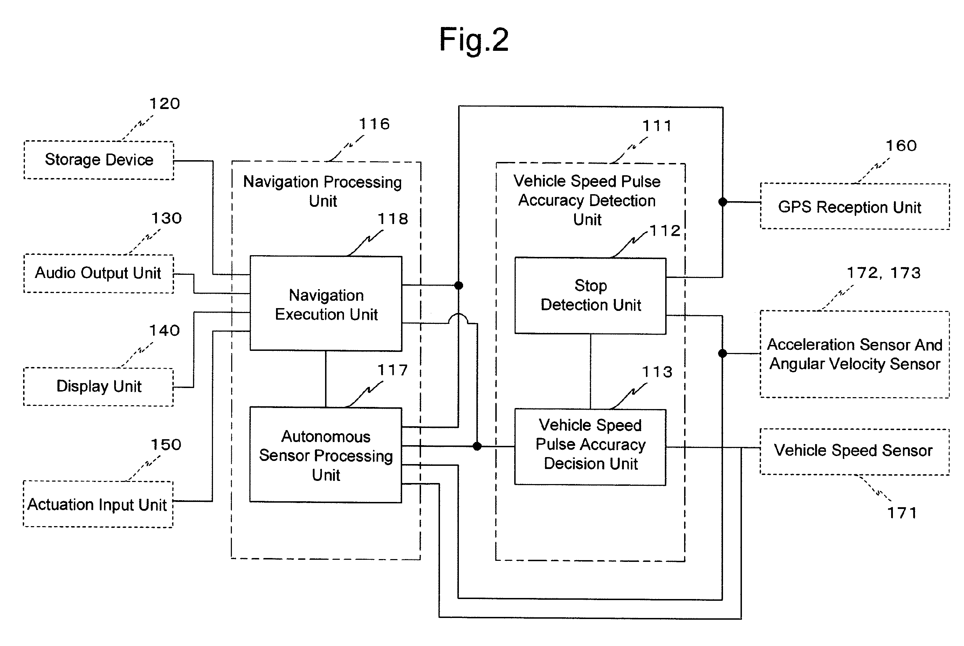

As shown in Fig. 2, the vehicle speed pulse accuracy detection unit 111 comprises a stop detection unit 112 which serves as a stop detection means, and a vehicle speed pulse accuracy decision unit 113 which serves as a decision means. The stop detection unit 112 detects stopping of the vehicle, based upon information reported from the GPS reception unit 160 and upon the results of acceleration detection and of angular velocity detection reported from an acceleration sensor 172 and an angular velocity sensor 173 of the movement sensor unit 170 which will be described hereinafter. It is arranged for the results of this detection to be reported to a vehicle speed pulse accuracy decision unit 113.

Based upon a vehicle speed detection result which is reported from a vehicle speed sensor 171 of the movement sensor unit 170 which will be described hereinafter, and upon stop detection information which is reported from the vehicle speed pulse accuracy decision unit 113, the vehicle speed pulse accuracy decision unit 113 makes a decision as to the quality of the accuracy by which the vehicle speed is reflected by the vehicle speed pulses which the vehicle speed sensor 171 uses as the foundation of vehicle speed detection. It is arranged for the results of this decision to be reported to the navigation processing unit 116.

The navigation processing unit 116 comprises an autonomous sensor processing unit 117 and a navigation execution unit 118. While referring to the information which is reported from the GPS reception unit 160 as appropriate, the autonomous sensor processing unit 117 calculates the distance over which the vehicle travels, the vehicle speed, the azimuth of travel, and so on by utilizing the result of detection which is reported from the movement sensor 170, which is an autonomous sensor unit, and the vehicle speed pulse accuracy information which is reported from the vehicle speed pulse accuracy decision unit 113. The results of calculation by the autonomous sensor processing unit 117 are reported to the navigation execution unit 118.

Based upon the information which is reported from the GPS reception unit 160 and the results of calculation by the autonomous sensor processing unit 117, the navigation execution unit 118 supplies navigation information to the user by utilizing the structural elements 130 through 150 described above, while accessing the storage device 120. In other words, the navigation execution unit 118 reads out information stored in the storage device 120 which corresponds to the results of command input from the actuation input unit 150 related to navigation processing, to the results of position measurement by the GPS reception unit 160, and to the results of detection by the movement sensor unit 170. And the navigation execution unit 118: (a) performs map display processing to display a map of a region which the user designates upon a display of the display unit 140; (b) calculates the position upon the map at which the subject vehicle is located and towards which bearing it is facing, and performs map matching processing to transmit this information to the user as a display upon the display of the display unit 140; (c) performs route search processing to find a travel route to recommend from the position at which the subject vehicle is currently located to any position which the user designates; and (d) when driving along a route which has been set to a destination, outputs audio guidance from the audio output unit 130 to perform route guidance and the like, in order to advise the user in an appropriate manner as to the direction in which he must proceed, while also providing display guidance upon the display of the display unit 140.

In the storage device 120 there are stored, not only information used for navigation 121 such as map information 122 and so on, but also various types of data necessary for operation of the navigation device 100. It is arranged for the control unit to be able to access the storage region of the storage device 120, and to be able to write data into said storage region and to read out data from said storage region.

The audio output unit comprises (i) a DA converter (Digital to Analog Converter) which converts digital audio data received from the control unit 11 into an analog signal, (ii) an amplifier which amplifies the analog signal outputted from said DA converter, and (iii) a speaker which converts this amplified analog signal into audio. Based upon control by the control unit 110, this audio output unit 130 outputs audio for guidance such as the direction of progression of the vehicle, its traveling state, traffic conditions, and the like, and music or the like.

The display unit 140 comprises (i) a display device such as a liquid crystal display panel, an organic EL (Electro Luminescent) panel, a PDP (Plasma Display Panel) or the like, (ii) a display controller such as a graphic renderer or the like, which performs control of the display unit 140 as a whole based upon display control data sent from the control unit 110, (iii) a display image memory which stores display image data, and the like. Based upon control by the control unit 110, this display unit displays map information, path information, actuation guidance information and the like.

The actuation input unit 150 comprises a key unit which is provided to the main body portion of the navigation device 100, or a remote input device or the like which comprises a key unit. Here, a touch panel which is provided to the display unit 140 may be used as this key unit which is provided to the main body portion. It should be understood that, instead of providing this key unit, it would also be possible to provide input by audio.

Setting of the operational contents of the navigation device 100 is performed by the user actuating this actuation input unit 150. For example setting of a destination, setting of search information, setting of display of the traveling state of the vehicle and so on are performed by the user employing the actuation input unit 150. This type of input contents is sent from the actuation input unit 150 to the control unit 110.

Based upon the results of reception of radio waves from a plurality of GPS satellites, the GPS reception unit 160 calculates pseudo-coordinate values (hereinafter termed the "GPS position") of the current position of the vehicle, and reports them to the control unit 110. Furthermore, the GPS reception unit 160 calculates the vehicle speed (hereinafter termed the "GPS speed") based upon wavelength change of the radio waves from the GPS satellites due to the Doppler effect, and reports it to the control unit 110. Moreover, the GPS reception unit 160 times the current time based upon the time sent from the GPS satellites, and sends it to the control unit 110.

The movement sensor unit 170 comprises (i) a vehicle speed sensor which detects the speed at which the vehicle moves, (ii) an acceleration sensor 172 which detects the acceleration which acts upon the vehicle, and (iii) an angular velocity sensor 173 which detects the angular velocity of the vehicle. Here, the vehicle speed sensor 171 detects a pulse signal which is outputted due to the rotation of, for example, a wheel axle or a vehicle wheel. Moreover, the acceleration sensor 172 detects, for example, the acceleration in a three dimensional direction. Furthermore, the angular velocity sensor may be, for example, structured as a so called gyro sensor, and detects the angular velocity. The results of these detections are sent from the movement sensor unit 170 to the control unit 110.

### Operation

Next, the operation of the navigation device 100 having the structure described above will be explained, with attention being principally directed to its detection processing for vehicle speed pulse accuracy and to the detection result of vehicle speed pulse accuracy.

### Detection processing for the vehicle speed pulse accuracy

First, the processing for detection of the vehicle speed pulse accuracy will be explained. This detection processing for the vehicle speed pulse accuracy is performed by the vehicle speed pulse accuracy detection unit 111, each time the GPS position and the GPS speed are reported from the GPS reception unit 160.

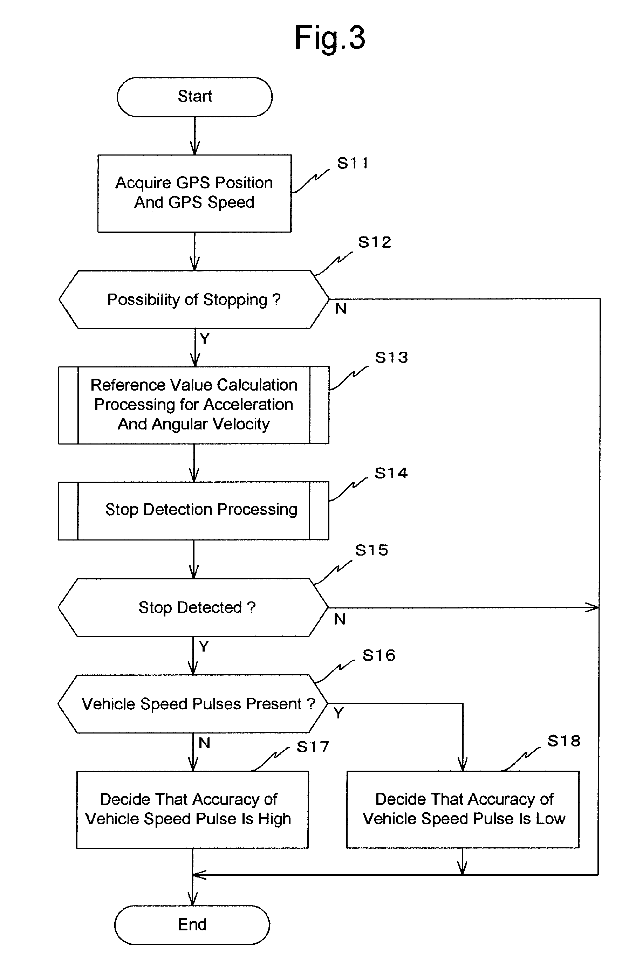

As shown in Fig. 3, in the detection processing for the vehicle speed pulse accuracy, first, in a step S11, the stop detection unit 112 acquires the GPS position and the GPS speed which are reported from the GPS reception unit 160. Next, in a step S12, based upon the GPS position and the GPS speed, the stop detection unit 112 decides whether or not there is a possibility that the vehicle is stopped. If the result of this decision is negative (step S12: N), then this detection processing for the vehicle speed pulse accuracy terminates.

On the other hand, if the result of the decision in the step S12 is affirmative (step S12: Y), then the flow of control proceeds to a step S13. In this step S13, calculation processing is performed for reference detected values of acceleration and angular velocity, which are to be used for deciding upon vehicle stopping.

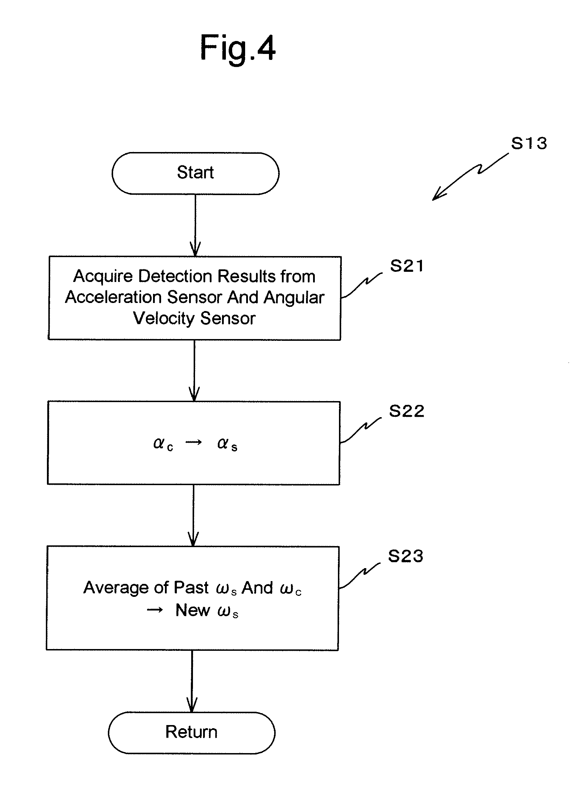

In the calculation processing of the step S 13 for the reference detected values, as shown in Fig. 4, first, in a step S21, the stop detection unit 112 acquires the acceleration detection result which is reported from the acceleration sensor 172 and the angular velocity detection result which is reported from the angular velocity sensor 173. It should be understood that, in this embodiment, it is arranged for this acquisition of the acceleration detection result and the angular velocity detection result to be performed over a fixed time period, so that, in this step S21, it is arranged for the most recent plurality of acceleration detection results and angular velocity detection results to be acquired.

Next, in a step S22, the stop detection unit 112 calculates a reference value of the acceleration detection result for deciding upon vehicle stopping (hereinafter this will be termed the "reference acceleration detected value α_{S}"). During this calculation of the reference acceleration detected value α_{S}, the stop detection unit 112 calculates the average of the results of acceleration detection by the acceleration sensor 172 which have been acquired in the step S21 (hereinafter this will be termed the "current acceleration detected value α_{C}"). And the stop detection unit 112 takes this current acceleration detected value α_{C} as the reference acceleration value α_{S}.

Next, in a step S23, the stop detection unit 112 calculates a reference value of the angular velocity detection result for deciding upon vehicle stopping (hereinafter this will be termed the "reference angular velocity detected value ω_{S}"). During this calculation of the reference angular velocity detected value ω_{S}, the stop detection unit 112 first calculates the average of the results of angular velocity detection by the angular velocity sensor 173 which have been acquired in the step S21 (hereinafter this will be termed the "current angular velocity detected value ω_{C}"). And next the stop detection unit 112 calculates the average of the previous reference angular velocity detected value ω_{S} and this current reference angular velocity detected value ω_{C}. And the stop detection unit 112 takes this average of the previous reference angular velocity detected value ω_{S} and the current reference angular velocity detected value ω_{C} as the new reference angular velocity detected value ω_{S}.

It should be understood that, during the calculation of the reference acceleration value α_{S}, the average of the previous reference acceleration value α_{S} and the current acceleration detected value α_{C} is not calculated as is done in the case of the reference angular velocity detected value ω_{S}, since the vehicle may be stopped upon roads with various different kinds of slopes. Furthermore, it would also be acceptable to arrange to perform either the processing of the step S22 or the processing of the step S23 first.

When the calculation as described above of the reference acceleration detected value α_{S} and of the reference angular velocity detected value ω_{S} as been completed, then the processing of the step S13 terminates. And the flow of control proceeds to the step S14 of Fig. 3.

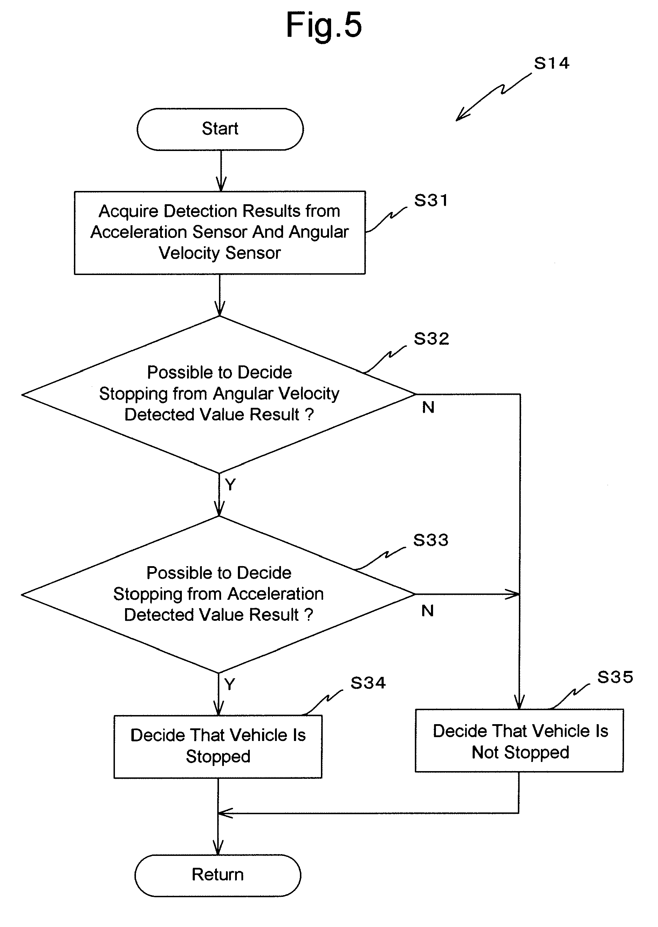

In the step S14, detection processing for stopping of the vehicle is performed. In this step S14, as shown in Fig. 5, first, in a step S31, the stop detection unit 112 acquires the acceleration detection result which is newly reported from the acceleration sensor 172 and the angular velocity detection result which is newly reported from the angular velocity sensor 173. It should be understood that, in this embodiment, it is also arranged for this acquisition of the new acceleration detection result and of the new angular velocity detection result to be performed over a fixed time period, in a similar manner to the case in the step S21 described above, so that a plurality of acceleration detection results and angular velocity detection results for the most recent past come to be acquired in the step S21.

Next, in a step S32, a decision is made as to whether or not, from the aspect of the angular velocity detection result, it is possible to decide that the vehicle is stopped. During this stop decision from the aspect of the angular velocity detection result, first, the stop detection unit 112 averages the acceleration detection results from the angular velocity sensor 173 that have been acquired in the step S31, and calculates a new current angular velocity detected value ω_{C}'. Next, the stop detection unit 112 compares together the reference angular velocity detected value ω_{S} at this time point and the new current angular velocity detected value ω_{C}', and, by deciding whether or not there is a difference between these two values while considering detection errors and the like, decides whether or not the vehicle is stopped from the aspect of the angular velocity detection result.

On the other hand, if the result of the decision in the step S32 is negative (step S32: N), then the flow of control proceeds to a step S35. In this step S35, the stop detection unit 112 decides that the vehicle is not stopped, and accordingly obtains a detection result of non-stopping. And the stop decision unit 112 reports this detection result to the vehicle speed pulse accuracy decision unit 113. Subsequently, the processing of the step S 14 terminates.

Returning to Fig. 5, if the result of the decision in the step S32 is affirmative (step S32: Y), then the flow of control proceeds to a step S33. In this step S33, a decision is made as to whether or not, from the aspect of the acceleration detection result, it is possible to decide that the vehicle is stopped. During this stop decision from the aspect of the acceleration detection result, first, the stop detection unit 112 averages the acceleration detection results from the acceleration sensor 172 that have been acquired in the step S31, and calculates a new current acceleration detected value α_{C}'. Next, the stop detection unit 112 compares together the reference acceleration detected value α_{S} at this time point and the new current acceleration detected value α_{C}', and, by deciding whether or not there is a difference between these two values while considering detection errors and the like, decides whether or not the vehicle is stopped from the aspect of the acceleration detection result.

If the result of the decision in the step S33 is negative (step S33: N), then the flow of control proceeds to a step S35, and the stop detection unit 112 decides that the vehicle is not currently stopped, and thus obtains a detection result of "not stopped". And the stop detection unit 112 reports this detection result to the vehicle speed pulse accuracy decision unit 113. Subsequently, the processing of the step S14 terminates.

On the other hand, if the result of the decision in the step S33 is affirmative (step S33: Y), then the flow of control proceeds to a step S34. In this step S34, the stop detection unit 112 decides that the vehicle is stopped, and thus obtains a detection result of "stopped". And the stop detection unit 112 reports this detection result to the vehicle speed pulse accuracy decision unit 113. Subsequently, the processing of the step S14 terminates.

When as described above the processing of the step S14 terminates, then the flow of control proceeds to a step S 15 of Fig. 3. In this step S15, the vehicle speed pulse accuracy decision unit 113 decides whether or not it has been detected that the vehicle is stopped. If the result of this decision is negative (step S15: N), then this detection processing for the vehicle speed pulse accuracy terminates without obtaining a new detection result.

On the other hand, if the result of the decision in the step S15 is affirmative (step S15: Y), then the flow of control proceeds to a step S16. In this step S16, a decision is made as to whether or not vehicle speed pulses are being inputted to the vehicle speed sensor 171 in the state in which it is detected that the vehicle is stopped. This decision as to the presence or absence of vehicle speed pulse input is performed by the vehicle speed pulse accuracy decision unit 113 deciding whether or not the vehicle speed value detected by the vehicle speed sensor 171 is zero.

If the result of the decision in the step S16 is negative (step S16: N), then the flow of control proceeds to a step S 17. In this step S 17, the vehicle speed pulse accuracy decision unit 113 decides that the accuracy of the vehicle speed pulses is high, in other words decides that the accuracy of the vehicle speed which is detected based upon the vehicle speed pulses is high, and obtains the detection result that the accuracy of the vehicle speed pulses is high. And the vehicle speed pulse accuracy decision unit 113 reports this detection result for the accuracy of the vehicle speed pulses to the navigation processing unit 116. Subsequently, this detection processing for the vehicle speed pulse accuracy terminates.

If the result of the decision in the step S 16 is affirmative (step S 16: Y), then the flow of control proceeds to a step S 18. In this step S 18, the vehicle speed pulse accuracy decision unit 113 decides that the accuracy of the vehicle speed pulses is low, in other words decides that the accuracy of the vehicle speed which is detected based upon the vehicle speed pulses is low, and obtains the detection result that the accuracy of the vehicle speed pulses is low. And the vehicle speed pulse accuracy decision unit 113 reports this detection result for the accuracy of the vehicle speed pulses to the navigation processing unit 116. Subsequently, this detection processing for the vehicle speed pulse accuracy terminates.

### Processing in response to the detection result of vehicle speed pulse accuracy

Next, the processing by the navigation processing unit 116 in response to the detection result of vehicle speed pulse accuracy will be explained by taking, as examples, offset measurement processing by the angular velocity sensor 173, traveled distance calculation processing, and map matching processing.

### (1) Offset measurement processing by the angular velocity sensor 173

First, the processing by the autonomous sensor processing unit 117 for offset measurement of the angular velocity sensor 173 will be explained.

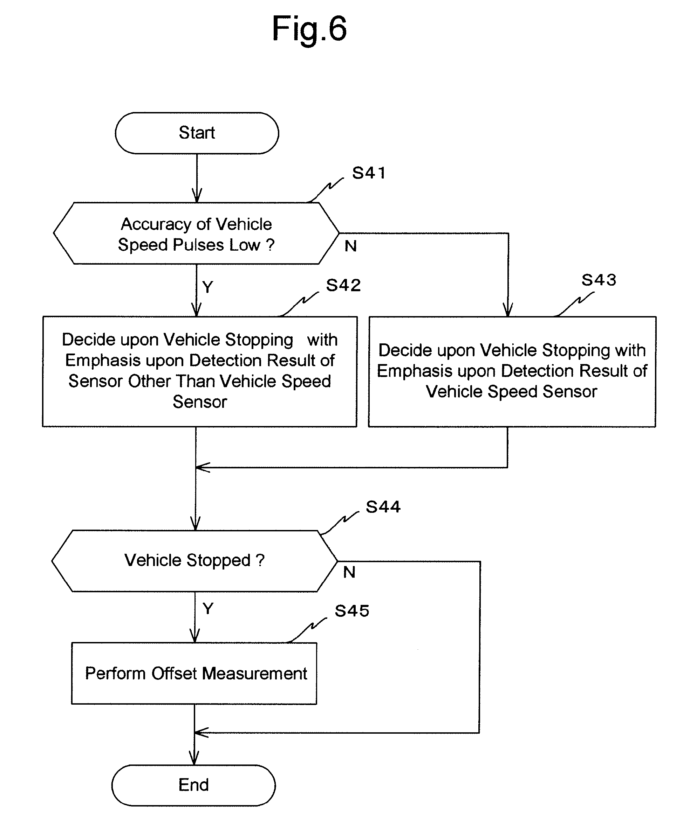

In this offset measurement processing for the angular velocity sensor 173, as shown in Fig. 6, first, in a step S41, the autonomous sensor processing unit 117 decides whether or not the accuracy of the vehicle speed pulses is low. If the result of this decision is affirmative (step S41: Y), then the flow of control proceeds to a step S42. In this step S42, a decision as to vehicle stopping is made while giving serious emphasis to the result of detection by a sensor other than the vehicle speed sensor 171. For example, the autonomous sensor processing unit 117 may decide whether or not the vehicle is stopped according to whether or not the average of the results of detection by the acceleration sensor 172 may be considered as being in agreement with the acceleration while the vehicle is stopped, and moreover according to whether or not the dispersion of the results of detection by the acceleration sensor 172 may be considered to be sufficiently small. It should be understood that, in this step S42, the autonomous sensor processing unit 117 may also perform this decision as to vehicle stopping, in further consideration of the average and/or the dispersion of the results of detection by the angular velocity sensor 173, and in further consideration of the GPS speed or the like.

On the other hand, if the result of the decision in the step S41 is negative (step S41: N), then the flow of control proceeds to a step S43. In this step S43, a decision as to vehicle stopping is made while giving serious consideration to the result of detection by the vehicle speed sensor 171. For example, the autonomous sensor processing unit 117 may decide whether or not the vehicle is stopped according to whether or not the result of detection by the vehicle speed sensor 171 indicates a speed of zero. It should be understood that, in this step S43, while giving serious consideration to the result of detection by the vehicle speed sensor 171, this decision as to vehicle stopping may also be performed in further consideration of the results of detection by the acceleration sensor 172 and/or the angular velocity sensor 173, and in further consideration of the GPS speed or the like.

After the above described decision in the step S42 or the step S43 as to vehicle stopping has been performed, in a step S44, the autonomous sensor processing unit 117 makes a decision as to whether or not it has been decided that the vehicle is stopped. If the result of this decision is negative (step S44: N), then the processing for offset measurement of the angular velocity sensor 173 terminates without offset measurement being performed.

On the other hand, if the result of the decision in the step S44 is affirmative (step S44: Y), then the flow of control proceeds to a step S45. In this step S45, offset measurement of the angular velocity sensor 173 is performed. During this offset measurement, the autonomous sensor processing unit 117 acquires the results of angular velocity detection by the angular velocity sensor 173 over a fixed time period, and calculates the average thereof. And it obtains an offset value for the output of the angular velocity sensor 173 by utilizing this average. Subsequently, this offset measurement processing for the angular velocity sensor terminates.

It should be understood that it is possible to perform offset measurement processing for the acceleration sensor 172 as well in a similar manner to the above described offset measurement processing for the angular velocity sensor 173, except for the fact that in the step S42 the average of the results of detection by the acceleration sensor 172 is not utilized.

### (2) Calculation processing for the distance traveled

Next, the calculation of the distance traveled by the autonomous sensor processing unit 117 will be explained.

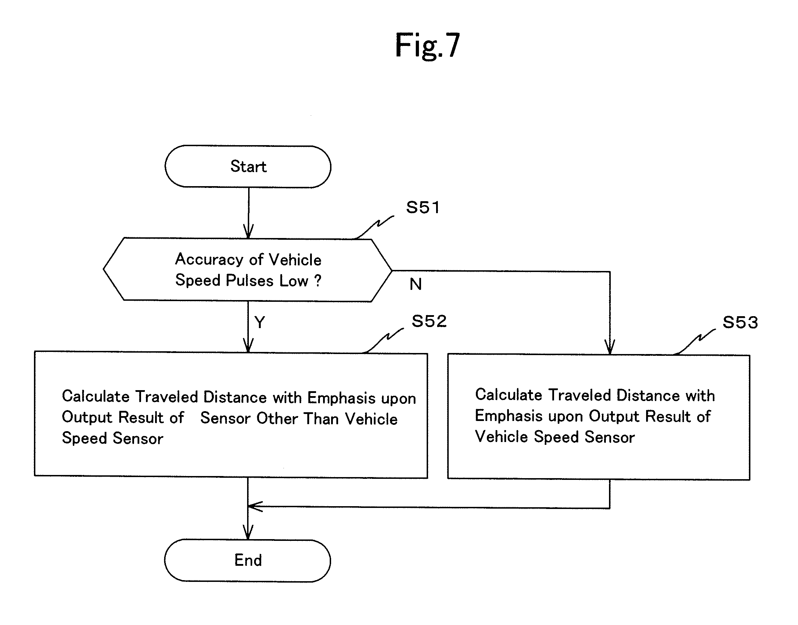

As shown in Fig. 7, in this calculation processing for the distance traveled, first, in a step S51, the autonomous sensor processing unit 117 makes a decision as to whether or not the accuracy of the vehicle speed pulses is low. If the result of this decision is affirmative (step S51: Y), then the flow of control proceeds to a step S52. In this step S52, the calculation of the distance traveled is performed while giving serious consideration to the result of detection by a sensor other than the vehicle speed sensor 171. For example, the autonomous sensor processing unit 117 may calculate the distance traveled by integrating the results of acceleration detection by the acceleration sensor 172 over time twice. It should be understood that, in this step S52, it would also be possible for the autonomous sensor processing unit 117 to perform this calculation of the distance traveled in further consideration of the GPS position and/or the GPS speed or the like.

On the other hand, if the result of the decision in the step S51 is negative (step S51: N), then the flow of control proceeds to a step S53. In this step S53, calculation of the distance traveled is performed while giving serious consideration to the result of detection by the vehicle speed sensor 171. For example, the autonomous sensor processing unit 117 may calculate the distance traveled by performing integration of the results of speed detection by the vehicle speed sensor 171 over time. It should be understood that, in this step S53, it would also be possible to perform this calculation of the distance traveled, while giving serious emphasis to the results of detection by the vehicle speed sensor 171, in further consideration of the results of acceleration detection by the acceleration sensor 172, and also of the GPS position and/or the GPS speed or the like.

When the distance traveled is calculated in the step S52 or in the step S53 as described above, the autonomous sensor processing unit 117 reports the result of calculation to the navigation execution unit 118. Subsequently, this calculation processing of the distance traveled by the autonomous sensor processing unit 117 terminates.

It should be understood that it would also be possible to perform this vehicle speed calculation processing by the autonomous sensor processing unit 117 in a similar manner to the case of the above described calculation of the distance traveled, except for the fact that the number of times for time integration in the step S52 should only be once, and for the fact that the time integration in the step S53 should be an averaging calculation.

### (3) Map matching processing

Next, the map matching processing by the navigation execution unit 118 will be explained.

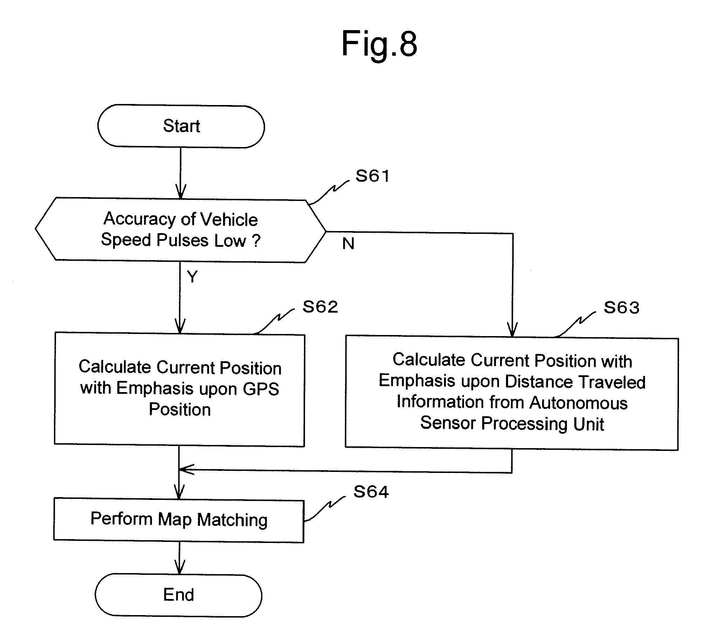

In this map matching processing, as shown in Fig. 8, first, in a step S61, the navigation execution unit 118 decides whether or not the accuracy of the vehicle speed pulses is low. If the result of this decision is affirmative (step S61: Y), then the flow of control proceeds to a step S62. In this step S62, calculation of the current position is performed by appropriately referring to the distance traveled information from the autonomous sensor processing unit 117, while giving serious consideration to the GPS position from the GPS reception unit 160.

On the other hand, if the result of the decision in the step S61 is negative (step S61: N), then the flow of control proceeds to a step S63. In this step S63, calculation of the current position is performed by appropriately referring to the GPS position from the GPS reception unit 160, while giving serious consideration to the distance traveled information from the autonomous sensor processing unit 117.

When the above described calculation of the current position of the vehicle in the step S62 or in the step S63 ends, in a step S64, the navigation execution unit 118 calculates at which position the subject vehicle is located upon the map and also towards what bearing it is facing, and performs map matching to transmit these to the user by displaying them upon the display of the display unit 140.

As has been described above, in this embodiment, stopping of the vehicle is detected without utilizing the vehicle speed pulses. And the level of the vehicle speed pulse accuracy is detected according to the presence or absence of the vehicle speed pulses in the situation in which stopping of the vehicle is detected. In this manner, the degree of utilization of the vehicle speed pulses during sensor offset measurement, calculation of the distance traveled, map matching, and so on, is changed according to the level of the vehicle speed pulse accuracy which has been obtained. Accordingly, it is possible to present navigation information of good accuracy to the user.

### Variant Embodiments

The present invention is not limited to the embodiment described above, but can be subjected to a range of variations.

For example although, in the embodiment described above, it was arranged for the vehicle speed sensor to detect a pulse signal which was outputted due to the rotation of a wheel axle or of a vehicle wheel, it would also be acceptable to arranged to detect a voltage signal which is outputted due to the rotation of a wheel axle or of a vehicle wheel.

Moreover, in the embodiment described above, in stop detection during the detection of the vehicle speed pulse accuracy, it was arranged to detect stopping of the vehicle based upon the result of comparison between the average α_{C}' of the acceleration detection results from the acceleration sensor 172 and the reference acceleration detected value α_{S}, and upon the result of comparison between the average ω_{C}' of the angular velocity detection results from the angular velocity sensor 173 and the reference angular velocity detected value ω_{S}. By contrast, it would also be acceptable to arrange to detect stopping of the vehicle in further consideration of the dispersion of the results of acceleration detection by the acceleration sensor 172, and/or in further consideration of the dispersion of the results of angular velocity detection by the angular velocity sensor 173. Moreover, it would also be acceptable to arrange to detect stoppage of the vehicle, only in consideration of the dispersion of the results of acceleration detection, and/or only in consideration of the dispersion of the results of angular velocity detection by the angular velocity sensor 173.

Moreover although, in the embodiment described above, in detection of stopping of the vehicle during detection of the vehicle speed pulse accuracy, it was arranged to detect the stopping of the vehicle in consideration of the result of GPS position detection, of the result of GPS speed detection, of the result of acceleration detection, and of the result of angular velocity detection, it would also be acceptable to arrange to detect stopping of the vehicle in consideration of any desired combination of these detection results.

Furthermore, in the embodiment described above, an example was explained in which, if it was detected that the vehicle speed pulse accuracy was low, the result of detection by the vehicle speed sensor 171 was not employed. By contrast, if it is decided that the result of detection by the vehicle speed sensor 171 is not incompatible with the result of GPS speed detection or with the result of acceleration detection, it would also be possible to arrange to utilize the result of detection by the vehicle speed sensor 17 even when it has been detected that the vehicle speed pulse accuracy is low, while applying thereto a weighting or the like which has been decided in advance.

Yet further although, in the embodiment described above, a case was explained in which the present invention was applied to a navigation device mounted to a vehicle, it would also be possible to apply the present invention to a navigation device which is mounted to a mobile unit other than a vehicle, such as a ship or an aircraft or the like.

It should be understood that, in the embodiment described above, it would also be acceptable to constitute the control unit 110 as a computer comprising a central processing device (CPU: Central Processing Unit), a dedicated read only memory (ROM: Read Only Memory), a random access memory (RAM: Random Access Memory) and the like, which is a calculation means, and to arrange to perform the processing of the embodiment described above by executing upon said computer a program which has been prepared in advance. This program is recorded upon a recording medium which can be read by the computer such as a hard disk, a CD-ROM, a DVD or the like, and is read out from the recording medium and executed by said computer. Moreover, it would be acceptable to arrange for this program to be acquired by the method of being recorded upon a transportable recording medium such as a CD-ROM or a DVD or the like, or it would also be acceptable to arrange for it to be acquired by the method of being transmitted via a network such as the internet or the like.

## Claims

1. A navigation device, **characterized by** comprising:
a speed detection means which detects speed information of a mobile unit by utilizing a specified signal which reflects speed;
a traveling state detection means which detects information about a traveling state of said mobile unit without utilizing said specified signal which reflects speed;
a stop detection means which detects the stopped state of said mobile unit based upon at least one result of detection by said traveling state detection means;
a decision means which, when it is detected by said stop means [sic] that said mobile unit is in the stopped state, decides whether or not the result of speed detection by said speed detection means is a speed which corresponds to the stopped state; and
a navigation processing unit which, if the result of the decision by said decision means is negative, performs processing for navigation while giving more emphasis to the result of detection by said traveling state detection means, than when the result of the decision by said decision means is affirmative.

2. A navigation device according to Claim 1, **characterized in that**, in said traveling state detection means, there is included at least one of a GPS reception means which receives and processes signals from the GPS satellites, an acceleration detection means which detects the acceleration of said mobile unit, and an angular velocity detection means which detects the angular velocity of said mobile unit.

3. A navigation device according to Claim 2, **characterized in that:**
said GPS reception means is included in said traveling state detection means; and
said decision means decides whether or not said mobile unit is in the stopped state, in consideration of the GPS position, which is current position information for said mobile unit obtained based upon the signals received from said GPS satellites, and the GPS speed, which is speed information for said mobile unit obtained based upon the signals received from said GPS satellites.

4. A navigation device according to Claim 2 or Claim 3, **characterized in that:**
said acceleration detection means is included in said traveling state detection means; and
said decision means decides whether or not said mobile unit is in the stopped state, in consideration of at least one of the average and the dispersion of the results of acceleration detection by said acceleration detection means.

5. A navigation device according to any one of Claims 2 through 4, **characterized in that:**
said angular velocity detection means is included in said traveling state detection means; and
said decision means decides whether or not said mobile unit is in the stopped state, in consideration of at least one of the average and the dispersion of the results of angular velocity detection by said angular velocity detection means.

6. A navigation process which is used by a navigation device comprising a speed detection means which detects speed information of a mobile unit by utilizing a specified signal which reflects speed, and a traveling state detection means which detects information about a traveling state of said mobile unit without utilizing said specified signal which reflects speed, **characterized by** comprising:
a stop detection process of detecting the stopped state of said mobile unit based upon at least one result of detection by said traveling state detection means;
a decision process of, when it is detected by said stop process that said mobile unit is in the stopped state, deciding whether or not the result of speed detection by said speed detection means is a speed which corresponds to the stopped state; and
a navigation processing process of, if the result of the decision by said decision process is negative, performing processing for navigation while giving more emphasis to the result of detection by said traveling state detection means, than when the result of the decision by said decision means is affirmative.

7. A navigation program, **characterized in that** a navigation method according to Claim 6 is executed by a calculation means of a navigation device.

8. A recording medium, **characterized in that** a navigation program according to Claim 7 is recorded thereupon so as to be readable by a calculation means of a navigation device.
